# EUROPÄISCHE PATENTSCHRIFT

(11) **EP 1 048 681 B1**
(45) Veröffentlichungstag und Bekanntmachung des Hinweises auf die Patenterteilung: **12.06.2002**
(21) Anmeldenummer: 00108723.8
(22) Anmeldetag: 22.04.2000
(51) Int. Cl.: C08G 18/80, C08G 18/32, C08G 18/28

(54) **Verfahren zur Herstellung eines Thixotropie-Mittels und dessen Verwendung**
Process for the preparation of a thixotropic compound and its use
Procédé pour la préparation d'un composé thixotrope et son utilisation

(30) Priorität: 29.04.1999 DE 19919482
(43) Veröffentlichungstag der Anmeldung: 02.11.2000
(73) Patentinhaber: Byk-Chemie GmbH, 46483 Wesel (DE)
(72) Erfinder: Haubennestel, Karlheinz, 46487 Wesel (DE); Orth, Ulrich, Dr., 46485 Wesel (DE)
(74) Vertreter: Leifert, Elmar, Dr.

(56) Entgegenhaltungen:
- EP-A- 0 006 252
- GB-A- 1 230 605
- US-A- 4 383 068

## Beschreibung

Die Erfindung betrifft ein Verfahren zur Herstellung einer als Thixotropie - Mittel wirksamen, Harnstoffurethane enthaltenden Lösung, bei dem Monohydroxyverbindungen mit Diisocyanat umgesetzt und die gebildeten Monoisocyanat - Addukte mit Diaminen in aprotischem Lösemittel in Gegenwart eines Lithiumsalzes zu Harnstoffurethanen weiter umgesetzt werden und die Verwendung der Lösung insbesondere zur Thixotropierung von Beschichtungsmitteln wie z. B. lösungsmittelhaltigen, lösungsmittelfreien und wässrigen Lacken, PVC-Plastisolen, Beschichtungen auf Epoxidbasis und auf Basis ungesättigter Polyesterharze.

Um die Rheologie von flüssigen Beschichtungsmitteln zu steuern, werden vorwiegend organisch modifizierte Bentonite, Kieselsäuren, hydriertes Rizinusöl und Polyamidwachse eingesetzt. Nachteilig bei diesen Stoffen ist, dass sie meist trockene Feststoffe darstellen, die mittels Lösungsmitteln und Scherkräften zu einem Halbfabrikat aufgeschlossen bzw. durch gezielte Temperartursteuerung in das flüssige Beschichtungsmittel eingebracht werden müssen. Werden diese Temperaturen nicht eingehalten, treten im fertigen Beschichtungsmittel Kristallite auf, die zu Fehlern in der Beschichtung führen können.
Der generelle Nachteil dieser heute eingesetzten rheologischen Hilfsstoffe ist, dass sie zu Trübungen und Schleierbildungen (Haze) in klaren, transparenten Beschichtungen führen. Außerdem ist der Umgang mit trockenen, pulverförmigen Produkten, die Stäube bei der Verarbeitung verursachen, nicht gewünscht.
Andere Lösungen zur Rheologiesteuerung wurden dargestellt in der europäischen Patentanmeldung EP-A-0 198 519. Hier wird ein Isocyanat mit einem Amin in Gegenwart von Lackharz-Lösungen zu einem Harnstoff umgesetzt, der in feinst disperser Form nadelförmige Kristalle bildet. Diese so modifizierten Lackbindemittel werden als rheologiesteuernde und ablaufverhindernde Bindemittel angeboten, als sogenannte "sag control agents".

Der Nachteil dieser Produkte liegt darin begründet, dass sie immer an die Bindemittel gebunden sind, in denen sie hergestellt wurden und keine nachträgliche universelle Korrektur von fertigen Beschichtungsmitteln zulassen.

In dem europäischen Patent EP-B-0 006 252 wird ein Verfahren zur Herstellung eines Thixotropiemittels beschrieben, das einige der o. g. Nachteile ausräumt, indem es Harnstoffurethane beschreibt, die in aprotischen Lösungsmitteln in Gegenwart von LiCI durch Umsetzung von Isocyanataddukten mit Polyaminen hergestellt werden. Der Nachteil der so hergestellten Produkte liegt in der durch das Herstellverfahren bedingten undefinierten Struktur dieser Harnstoffurethane. Es werden zwar Isocyanatmonoaddukte beschrieben, tatsächlich liegen hier aber gar keine Monoaddukte vor, wie dies aus dem Beispiel klar ersichtlich wird, sondern Mischungen verschiedener Addukte. Bei dem beschriebenen Verfahren wird ein Mol eines Diisocyanates zunächst mit einem Mol eines Monoalkohols umgesetzt. Dabei entstehen teilweise die gewünschten NCO-funktionellen Monoaddukte, aber auch nicht NCO-funktionelle Diaddukte. Außerdem bleibt ein Anteil an monomerem Diisocyanat nicht umgesetzt.

Die Anteile dieser verschiedenen Verbindungen können schwanken je nach Zugänglichkeit der NCO-Gruppe und der angewandten Reaktionsführung, wie Temperatur und Zeit. Der größte Nachteil liegt jedoch darin begründet, dass alle diese so hergestellten Addukte grössere Mengen nicht umgesetztes Diisocyanat enthalten, welches bei der weiteren Umsetzung mit Polyaminen in Gegenwart von Lithiumchlorid zu unkontrollierter Kettenverlängerung des Harnstoffurethans und zu polymeren Harnstoffen führt. Diese Produkte neigen dann zu Ausfällungserscheinungen und sind nur unter größten Schwierigkeiten in Lösung zu halten.

Der vorliegenden Erfindung liegt daher die Aufgabe zugrunde, ein Verfahren zu finden, welches Thixotropiemittel einer definierten Struktur erzeugt und damit eine größere Lagerstabilität über mehrere Monate der so hergestellten Lösungen zuläßt und damit eine sichere Anwendung der Produkte ermöglicht.

Überraschenderweise wurde gefunden, dass diese Aufgabenstellung dadurch gelöst werden kann, dass Monohydroxyverbindungen der allgemeinen Formel (I)

R-OH (I)

in der R für n-Alkyl oder i-Alkyl mit 4 bis 22 C-Atomen, Cycloalkyl mit 6 bis 12 C-Atomen, Aralkyl mit 7 bis 12 C-Atomen, oder einen Rest der Formel CₘH₂ₘ₊₁(O-CₙH₂ₙ)ₓ - oder CₘH₂ₘ₊₁(OOC-CᵥH₂ᵥ)ₓ - mit m = 1 - 22, n = 2 - 4, x = 1 - 15 und v = 4 oder 5 steht, mit einem 1,5- bis 5-fachen molaren Überschuß von Toluylendiisocyanat umgesetzt werden, der nicht umgesetzte Teil des Toluylendiicocyanats aus dem Reaktionsgemisch entfernt wird und das erhaltene Monoisocyanat - Addukt mit Diaminen der allgemeinen Formel (II)

H₂N - R" - NH₂ (II)

mit R" = - C_{y}H_{2y} - mit y = 2 - 12 und/oder mit 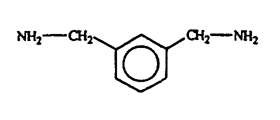 und/oder mit 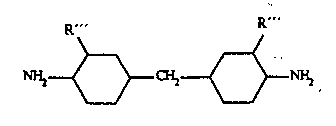 mit R"' = CH₃ - oder H in Gegenwart eines Lithiumsalzes umgesetzt wird.

Der molare Überschuß an Toluylendiisocyanat beträgt bevorzugt 2 - 4 Mol, besonders bevorzugt 2 - 3 Mol. Bevorzugt sind die Toluylendiisocyanat-Isomere mit 50-80% 2.4-Isomer-Anteil.

Nach beendeter Reaktion des Alkohols R-OH mit Teilen des verfügbaren Diisocyanats zum Isocyanatmonoaddukt, wird der nicht umgesetzte Anteil des Diisocyanats aus dem Reaktionsgemisch entfernt, vorzugsweise unter schonenden Bedingungen im Vakuum abdestilliert.

Als Lithiumsalze können LiCI oder LiNO₃ eingesetzt werden, bevorzugt aber LiNO₃. Der Feststoffgehalt der so erzeugten Harnstoffurethanlösungen beträgt 5 - 80 %, bevorzugt 20 - 60 Gew.-%, besonders bevorzugt 25 - 50 %. Die Umsetzung der Monoaddukte mit dem Diamin erfolgt in einem polaren aprotischen Lösungsmittel, wie z. B. Dimethylsulfoxid, N,N-Dimethylformamid, N,N-Dimethylacetamid, N-Methylpyrrolidon, N-Butylpyrrolidon oder vergleichbaren Alkylpyrrolidonen.

Der Anteil an Lithiumverbindungen beträgt 0,2 - 2 Mol, vorzugsweise 0,5 - 1,5 Mol, besonders bevorzugt 0,75 - 1,25 Mol Lithium bezogen auf das Aminäquivalent des eingesetzten Diamins.

Besonders vorteilhaft ist dar Einsatz von LiNO₃ im Gegensatz zu LiCI, da Chloridionen sich nachteilig in Beschichtungsmittel auswirken und die Korrosion der metallischen Untergründe fördern, auf welche die thixotropen Beschichtungsmittel aufgetragen werden.

Die so hergestellten Harnstoffurethane enthalten weder freie Isocyanat- noch freie Aminogruppen. Sie sind dementsprechend physiologisch unbedenklich. Des weiteren treten keine negativen Nebenreaktionen mit Bindemitteln oder Füllstoffen auf. Die Lagerstabilität dieser so hergestellten Harnstoffurethanlösungen ist außerordentlich hoch und beträgt bei normaler Lagertemperatur durchaus 6 Monate oder mehr.

### 1. Vergleichsbeispiel nach EP 0006252 (nicht erfindungsgemäß)

1 Mol (174g) Toluylendiisocyanat (65% 2.4-Isomer, im folgenden T65 genannt) wird im Reaktionsgefäß vorgelegt und 1 Mol Butyltriglykol (mittleres MG: 212g) unter Rühren langsam zugetropft und nach bekanntem Verfahren zu Ende geführt. Dabei wird die Temperatur unterhalb 40°C gehalten. Das so hergestellte Isocyanat-Addukt hat einen freien TDI-Gehalt von 7,3 %, der Gesamt-NCO-Gehalt beträgt 10,9% . Diese Reaktionsmischung wird zu einer Lösung aus 0,5 Mol Xylylendiamin (68g) und 0,75 Mol LiCl, bezogen auf Aminäquivalent, in N-Methylpyrrolidon (NMP) zudosiert. Der FK beträgt 50 Gew.-%. Die Reaktion verläuft exotherm. Die so hergestellte Harnstoff-Lösung neigt nach relativ kurzer Zeit zur Ausbildung von Kristallen bzw. zur Gel-Bildung

### 2. Herstellung der Monoaddukte (erfindungsgemäß) Beispiele 1-8:

### Beispiel 1:

0,5 Mol (37g) n- Butanol werden bei 30 zu 1,25 Mol (217,5g) Toluylendiisocyanat (80% 2.4-Isomer, im folgenden T80 genannt) in 2 Std. zudosiert. Die Temperatur wird dabei unterhalb 45°C gehalten. Nach beendeter Zugabe wird weiter 2 Std. gerührt, bis der theoretische NCO - Gehalt von 33,0 % erreicht ist. Der Überschuß des Isocyanates wird im Vakuum (0,1 mbar) bei 150 - 170° C abdestilliert. Der NCO-Gehalt beträgt 16,9%, der freie TDI - Gehalt < 0,5 %.

### Beispiel 2:

0,25 Mol Butyltriglykol (53g) (Hydroxylzahl: 265) werden bei Raumtemperatur zu 0,625 (108,75g) Mol Toluylendiisocyanat (T65) in 2 Std. zudosiert. Dabei wird die Temperatur unterhalb 45°C gehalten. Nach beendeter Zugabe wird weiter 2,5 Std. gerührt, bis der theoretische NCO - Gehalt von 26,0 % erreicht ist. Der Überschuß des Isocyanates wird im Vakuum (0,1 mbar) bei 150 - 170° C abdestilliert. Der NCO-Gehalt beträgt 10,7%, der freie TDI - Gehalt < 0,5 %.

### Beispiel 3:

0,3 Mol Decanol-1 (47,4g) werden bei 50°C zu 0,6 Mol (104,4g)Toluylendiisocyanat (T80) in 2 Std. zudosiert. Die Temperatur wird dabei zwischen 50°C und 55°C gehalten. Nach beendeter Zugabe wird weiter 3 Std. gerührt, bis der theoretische NCO - Gehalt von 24,9 % erreicht ist. Der Überschuß des Isocyanates wird im Vakuum (0,1 mbar) bei 150 - 170° C abdestilliert. Der NCO-Gehalt beträgt 12,7%, der freie TDI - Gehalt < 0,5 %.

### Beispiel 4:

0,3 Mol Dodecanol-1 (55,8g) werden bei 50°C zu 0,6 Mol (104,4g) Toluylendiisocyanat (T80) in 2 Std. zudosiert. Die Temperatur wird dabei zwischen 50°C und 55°C gehalten. Nach beendeter Zugabe wird weiter 3 Std. gerührt, bis der theoretische NCO - Gehalt von 23,6 % erreicht ist. Der Überschuß des Isocyanates wird im Vakuum (0,1 mbar) bei 150 - 170° C abdestilliert. Der NCO-Gehalt beträgt 11,7%, der freie TDI - Gehalt < 0,5 %.

### Beispiel 5:

0,2 Mol Cyclohexanol (20g) werden bei 30°C zu 0,8 Mol (139,2g) Toluylendiisocyanat (T65) in 2 Std. zudosiert. Die Temperatur steigt dabei an und wird zwischen 50°C und 55°C gehalten. Nach beendeter Zugabe wird weiter 3,5 Std. gerührt, bis der theoretische NCO - Gehalt von 36,9 % erreicht ist. Der Überschuß des Isocyanates wird im Vakuum (0,1 mbar) bei 150 - 170° C abdestilliert. Der NCO-Gehalt beträgt 15,4%, der freie TDI - Gehalt < 0,5 %.

### Beispiel 6:

0,25 Mol i-Tridecanol (50g) werden bei 40°C zu 0,75 Mol (130,5g) Toluylendiisocyanat (T65) in 2 Std. zudosiert. Die Temperatur wird dabei unterhalb 60°C gehalten. Nach beendeter Zugabe wird weiter 2 Std. gerührt, bis der theoretische NCO - Gehalt von 29,1 % erreicht ist. Der Überschuß des Isocyanates wird im Vakuum (0,1 mbar) bei 150 - 170° C abdestilliert. Der NCO-Gehalt beträgt 11,3%, der freie TDI - Gehalt < 0,5 %.

### Beispiel 7:

0,25 Mol Butanol (18g) werden mit 0,5 mol Caprolacton (57g) und 0,1% (0,075g) DBTL bei 160°C 6 Std. zur Reaktion gebracht und anschließend auf 50°C abgekühlt. Der so hergestellte Hydroxyester (BuCP2) (Hydroxylzahl 186) wird bei 40°C in 2 Std. zu 0,75 Mol Toluylendiisocyanat (130,5g) zudosiert. Die Temperatur wird dabei unterhalb 60°C gehalten. Nach beendeter Zugabe wird weiter 2 Std. gerührt, bis der theoretische NCO - Gehalt von 25,5 % erreicht ist. Der Überschuß des Isocyanates wird im Vakuum (0,1 mbar) bei 150 - 170° C abdestilliert. Der NCO-Gehalt beträgt 8,9 %, der freie TDI ― Gehalt < 0,5 %.

### Beispiel 8:

0,2 Mol Methoxypolyethylenglykol 350 (70g) werden bei 50°C zu 0,6 Mol (104,4g) Toluylendiisocyanat (T80) in 2 Std. zudosiert. Die Temperatur wird dabei zwischen 50°C und 55°C gehalten. Nach beendeter Zugabe wird weiter 3 Std. gerührt, bis der theoretische NCO - Gehalt von 24,1 % erreicht ist. Der Überschuß des Isocyanates wird im Vakuum (0,1 mbar) bei 150 - 170° C abdestilliert. Der NCO-Gehalt beträgt 8,0%, der freie TDI ― Gehalt < 0,5 %.

**Tabelle 1:**

| **Monoaddukte** | | | | |
|---|---|---|---|---|
| **Beispiel** | **Alkohol** | **NCO-Gehalt** | **Equ.-Gew** | **Mol-Verhältnis** |
| | | | | |
| 1 | Butanol | 16,9 % | 248 | 2,5 : 1 |
| 2 | Butyltriglykol | 10,7 % | 392 | 2,5 : 1 |
| 3 | Decanol | 12,7 % | 330 | 2 : 1 |
| 4 | Dodecanol | 11,7 % | 358 | 2 : 1 |
| 5 | Cyclohexanol | 15,4 % | 274 | 4 : 1 |
| 6 | i-Tridecanol | 11,3 % | 372 | 3 : 1 |
| 7 | BuCP2 | 9,2% | 457 | 3 : 1 |
| 8 | MPEG 350 | 8,0% | 525 | 3 : 1 |

### 2. Herstellung der Harnstoffurethane (erfindungsgemäß) Beispiele 9-16:

### Beispiel 9:

In 332 g N-Methylpyrrolidon werden bei 80°C 15,9 g LiCI und 68 g (0,5 mol) Xylylendiamin gelöst. Dann werden innerhalb 1 Std. 248 g des unter Beispiel 1 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 50 Gew.-%. Man erhält ein klares Produkt, das ohne Gelbildung längere Zeit stabil bleibt.

### Beispiel 10:

In 476 g N-Methylpyrrolidon werden bei 80°C 15,9 g LiCI und 68 gr. (0,5 Mol) Xylylendiamin gelöst. Dann werden innerhalb 1 Std. 386 g des unter Beispiel 2 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 50 Gew.-%. Man erhält ein klares, über längere Zeit stabiles Produkt.

### Beispiel 11:

In 424 g Dimethylformamid werden bei 80°C 25,8 g LiNO₃ und 68 g (0,5 Mol) Xylylendiamin gelöst. Dann werden innerhalb 1 Std. 332 g des unter Beispiel 3 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 50 Gew.-%. Das Produkt ist über einen längeren Zeitraum klar.

### Beispiel 12:

In 839 g Dimethylacetamid werden bei 80°C 25,8 g LiNO₃ und 68 g (0,5 Mol) Xylylendiamin gelöst. Dann werden innerhalb 1 Std. 360 g des unter Beispiel 4 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 35 Gew.-%. Man erhält ein klares, über längere Zeit stabiles Produkt.

### Beispiel 13:

In 374 g N-Methylpyrrolidon werden bei 80°C 15,9 g LiCI und 84 g (0,5 Mol) Hexamethylendiamin gelöst. Dann werden innerhalb 1 Std. 274 g des unter Beispiel 5 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 50 Gew.-%. Man erhält ein klares, über längere Zeit stabiles Produkt.

### Beispiel 14:

In 361,5 g Dimethylformamid werden bei 80°C 12,9 g LiNO₃ und 42 g (0,25 Mol) Hexamethylendiamin gelöst. Dann werden innerhalb 1 Std. 186 g des unter Beispiel 6 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 40 Gew.-%. Man erhält ein klares, über längere Zeit stabiles Produkt.

### Beispiel 15:

In 652 g N-Methylpyrrolidon werden bei 80°C 8,0 g LiCl und 27,2 g (0,2 Mol) Xylylendiamin gelöst. Dann werden innerhalb 1 Std. 191 g des unter Beispiel 7 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 25 Gew.-%. Man erhält ein klares, über längere Zeit stabiles Produkt.

### Beispiel 16:

In 245 g N-Methylpyrrolidon werden bei 80°C 9,0 g LiCl und 27,2 g (0,2 Mol) Xylylendiamin gelöst. Dann werden innerhalb 1 Std. 210 g des unter Beispiel 8 hergestellten Monoadduktes zudosiert. Nach erfolgter Zugabe wird noch 30 Min. gerührt und dann auf Raumtemperatur abgekühlt. Die so erhaltene Harnstoffurethanlösung hat einen Feststoffgehalt von 50 Gew.-%. Man erhält ein klares, über längere Zeit stabiles Produkt.

**Tabelle 2:**

| **Harnstoffurethane** | | | |
|---|---|---|---|
| **Beispiel-Nr** | **Monoaddukt aus Beispiel-Nr** | **Diamin** | **Lösemittel** |
| 9 | 1 | Xylylendiamin | N-Methylpyrrolidon |
| 10 | 2 | Xylylendiamin | N-Methylpyrrolidon |
| 11 | 3 | Xylylendiamin | Dimethylformamid |
| 12 | 4 | Xylylendiamin | N-Methylpyrrolidon |
| 13 | 5 | Hexamethylendiamin | N-Methylpyrrolidon |
| 14 | 6 | Hexamethylendiamin | Dimethylformamid |
| 15 | 7 | Xylylendiamin | N-Methylpyrrolidon |
| 16 | 8 | Xylylendiamin | N-Methylpyrrolidon |

### Anwendungstechnische Beispiele:

Die erfindungsgemäßen Harnstoffurethane wurden in Wasser, Lösemittelmischungen und in Bindemittel-Lösungen auf ihre Fähigkeit zur Ausbildung von Gelen untersucht. Desweiteren wurden die erreichbaren Schichtdicken in den Bindemitteln ermittelt.

Als Lösemittelgemische wurden n-Butanol/Xylol 1:1 und n-Butylacetat/Methoxypropanol 1:1 eingesetzt.

Folgende Bindemittel wurden eingesetzt:
Desmophen VPLS 2009: Hydroxyfunktionelles Polyacrylat, 70%ig in n-Butylacetat (Bayer AG)
Plexigum PQ 610: thermoplastisches Polyacrylat-Pulver, angelöst 60%ig in n-Butylacetat (Röhm GmbH)

Prüfung im Bindemittel:
Es werden 1 % der Harnstoffurethan-Lösung unter starkem Rühren (Dispermat, 2m/sec.) in das lösemittelhaltige Bindemittel eingerührt.
Nach 24 Std. wird der Ablauftest bei 30 - 300 µm durchgeführt. Dazu wird diese Mischung mit einer Stufenrakel aufgetragen.
Bewertung : Standfestigkeit (Schichtdicke) in µm

Prüfung im Lösemittel bzw. Wasser:
Zur Überprüfung der Gelstärke in Wasser bzw. in Lösemitteln werden die Harnstoffurethane durch einfaches Schütteln in das Wasser bzw. die Lösemittel eingearbeitet. Die Beurteilung erfolgt nach 4 Std.
Bewertung im Wasser bzw. Lösemittelgemisch: 1 = starkes Gel, 6 = kein Gel

**Tabelle 3:**

| **Anwendungstechnische Ergebnisse** | | | | |
|---|---|---|---|---|
| | **Gelstärke in n-Butanol/ Xylol 1:4** | **Gelstärke in Butylacetat / Methoxypropanol 3:1** | **Schichtdicke in Desmophen VPLS 2009** | **Schichtdicke in Plexigum PQ 610** |
| Vergleichs beispiel | 3-4 | 3-4 | 120 µm / leichte Stippen | 90 µm / Stippen |
| Beispiel 9 | 2-3 | 2 | 150 µm / keine Stippen | 150 µm / keine Stippen |
| Beispiel 10 | 2 | 2-3 | 180 µm / keine Stippen | 150 µm / keine Stippen |
| Beispiel 11 | 2 | 2 | 150 µm / keine Stippen | 180 µm / keine Stippen |
| Beispiel 12 | 2 | 2 | 150 µm / keine Stippen | 210 µm / keine Stippen |
| Beispiel 13 | 2-3 | 2 | 150 µm / keine Stippen | 150 µm / keine Stippen |
| Beispiel 14 | 2 | 2 | 180 µm / keine Stippen | 180 µm / keine Stippen |
| Beispiel 15 | 2 | 2-3 | 150 µm / keine Stippen | 120 µm / keine Stippen |
| | **Gelstärke in Wasser** | | | |
| Beispiel 16 | 2 | - | 150 µm / keine Stippen | - |

## Patentansprüche

1. Verfahren zur Herstellung einer als Thixotropie - Mittel wirksamen, Harnstoffurethane enthaltenden Lösung, bei dem Monohydroxyverbindungen mit Diisocyanat umgesetzt und die gebildeten Monoisocyanat - Addukte mit Diaminen in aprotischem Lösemittel in Gegenwart eines Lithiumsalzes zu Harnstoffurethanen weiter umgesetzt werden, **dadurch gekennzeichnet, dass** Monohydroxyverbindungen der allgemeinen Formel (I)
R-OH (I)
in der R für n-Alkyl oder i-Alkyl mit 4 bis 22 C-Atomen, Cycloalkyl mit 6 bis 12 C-Atomen, Aralkyl mit 7 bis 12 C-Atomen, oder einen Rest der Formel CₘH₂ₘ₊₁(O-CₙH₂ₙ)ₓ - oder CₘH₂ₘ₊₁(OOC-CᵥH₂ᵥ)ₓ - mit m = 1 - 22, n = 2 - 4, x = 1 - 15 und v = 4 oder 5 steht, mit einem 1,5- bis 5-fachen molaren Überschuß von Toluylendiisocyanat umgesetzt werden, der nicht umgesetzte Teil des Toluylendiicocyanats aus dem Reaktionsgemisch entfernt wird und das erhaltene Monoisocyanat - Addukt mit Diaminen der allgemeinen Formel (II)
H₂N-R"-NH₂ (II)
mit R" = - C_{y}H_{2y} - mit y = 2 - 12 und/oder mit 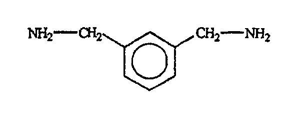 und/oder mit 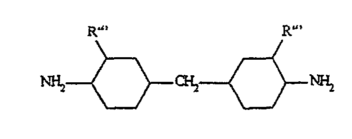 mit R"' = CH₃ - oder H in Gegenwart eines Lithiumsalzes umgesetzt wird.

2. Verfahren nach Anspruch 1, **dadurch gekennzeichnet, dass** eine Lösung mit einem Feststoffgehalt von 5 - 80 Gew.-% hergestellt wird.

3. Verfahren nach Anspruch 1 oder 2, **dadurch gekennzeichnet, dass** der molare Überschuß an Toluylendiisocyanat 2 bis 4 beträgt.

4. Verfahren nach Anspruch 1 bis 3, **dadurch gekennzeichnet, dass** ein Toluylendiisocyanat - Isomerengemisch mit einem Anteil von 50 - 80 Gew.-% 2.4 - Isomer verwendet wird.

5. Verfahren nach Anspruch 1 bis 4, **dadurch gekennzeichnet, dass** 0,2 - 2 Mol Lithiumverbindung bezogen auf das Äquivalentgewicht des Diamins eingesetzt werden.

6. Verfahren nach Anspruch 1 bis 5, **dadurch gekennzeichnet, dass** als Lithiumsalz LiNO₃ eingesetzt wird.

7. Verwendung der nach dem Verfahren nach Anspruch 1 bis 6 hergestellten Lösung zur Thixotropierung von Beschichtungsmitteln.

## Claims

1. Process for preparing a solution that is active as a thixotropic agent and contains urea urethanes, in which monohydroxyl compounds are reacted with diisocyanate and the monoisocyanate adducts formed are further reacted with diamines in aprotic solvent in the presence of a lithium salt to form urea urethanes, **characterized in that** monohydroxyl compounds of the general formula (I)
R-OH (I)
in which R is n-alkyl or isoalkyl containing 4 to 22 carbon atoms, cycloalkyl containing 6 to 12 carbon atoms, aralkyl containing 7 to 12 carbon atoms or a radical of the formula CₘH₂ₘ₊₁(O-CₙH₂ₙ)ₓ- or CₘH₂ₘ₊₁(OOC-CᵥH₂ᵥ)ₓ-, where m = 1 - 22, n = 2 - 4, x = 1 - 15 and v = 4 or 5, are reacted with a 1.5 times to 5 times molar excess of toluylene diisocyanate, the unreacted portion of the toluylene diisocyanate is removed from the reaction mixture and the monoisocyanate adduct obtained is reacted with diamines of the general formula (II)
H₂N-R"-NH₂ (II)
where R" = -C_{y}H_{zy} with y = 2-12 and/or with 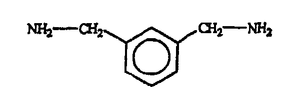 and/or with 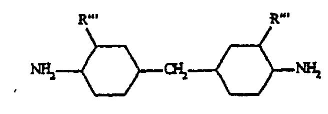 where R"' = CH₃- or H, in the presence of a lithium salt.

2. Process according to Claim 1, **characterized in that** a solution having a solids content of 5 - 80% by weight is prepared.

3. Process according to Claim 1 or 2, **characterized in that** the molar excess of toluylene diisocynate is 2 - 4 mol.

4. Process according to Claims 1 - 3, **characterized in that** the toluylene diisocyanate isomer mixture is used with a 2,4-isomer proportion of 50-80% by weight.

5. Process according to Claims 1 to 4, **characterized in that** 0.2 - 2 mol of lithium compound, relative to the equivalent weight of the diamine, is used.

6. Process according to Claims 1 to 5, **characterized in that** LiNO₃ is used as lithium salt.

7. Use of the solution prepared by the process according to Claims 1 to 6 for imparting thixotropic properties to coating compounds.

## Revendications

1. Procédé de préparation d'une solution contenant de l'uréthane urée efficace comme agent de thixotropie, dans lequel les composés monohydroxy réagissent avec le diisocyanate et les adduits monoisicyanate formés sont transformés en uréthanes urée avec des diamines dans un solvant aprotique en présence d'un sel de lithium, **caractérisé en ce que** les composés monohydroxy ont la formule générale (I)
R-OH (I)
dans laquelle R représente un n-alkyle ou un i-alkyle ayant entre 4 et 22 atomes de C, un cycloalkyle ayant entre 6 et 12 atomes de C, un aralkyle ayant entre 7 et 12 atomes de C, ou un résidu de formule CₘH₂ₘ₊₁(O-CₙH₂ₙ)ₓ - ou CₘH₂ₘ₊₁(OOC-CᵥH₂ᵥ)ₓ- avec m = 1 - 22, n = 2 - 4, x = 1 - 15 et v = 4 ou 5, avec un excès molaire de 1,5 à 5 fois de diisocyanate de toluylène, la fraction non réagie du diisocyanate de toluylène est éliminée du mélange réactionnel et l'adduit monoisocyanate obtenu est mis en réaction avec des diamines de formule générale (II)
H₂N-R"-NH₂ (II)
avec R" = -C_{y}H_{2y}- avec y = 2-12 et/ou avec 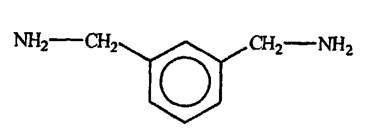 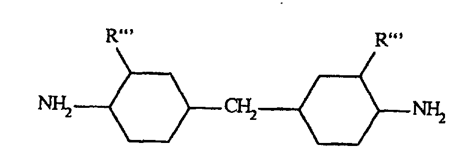 avec R"' = CH₃- ou H en présence d'un sel de lithium.

2. Procédé selon la revendication 1, **caractérisé en ce qu'**on prépare une solution ayant une teneur en matières solides de 5-80%.

3. Procédé selon l'une des revendications 1 ou 2, **caractérisé en ce que** l'excès molaire en diisocyanate de toluylène est compris entre 2 et 4.

4. Procédé selon l'une des revendications 1 à 3, **caractérisé en ce qu'**un mélange d'isomères de diisocyanate de toluylène avec une teneur en isomère 2.4 de 50-80% en poids est utilisé.

5. Procédé selon l'une des revendications 1 à 4, **caractérisé en ce qu'**on utilise 0,2 - 2 moles de composé lithium par rapport au poids équivalent de diamine.

6. Procédé selon l'une des revendications 1 à 5, **caractérisé en ce qu'**on utilise le LiNO₃ comme sel de lithium.

7. Utilisation d'une solution préparée avec le procédé selon l'une des revendications 1 à 6 pour la thixotropisation d'agents d'enduction.
